# EUROPEAN PATENT SPECIFICATION

(11) **EP 0 709 282 B1**
(45) Date of publication and mention of the grant of the patent: **25.08.1999**
(21) Application number: 95500143.3
(22) Date of filing: 25.10.1995
(51) Int. Cl.: B62J 9/00

(54) **Motorcycle case having a mechanism for the securing and closure thereof**
Motorradkoffer mit dazugehörigem Schliess- und Haltemechanismus
Coffre de motocyclette avec un mécanisme de fermeture et de serrage

(30) Priority: 31.10.1994 ES 9402767 U
(43) Date of publication of application: 01.05.1996
(73) Proprietor: Lucia Monforte, Pedro, 08100 Mollet del Valles (ES)
(72) Inventor: Lucia Monforte, Pedro, 08100 Mollet del Valles (ES)
(74) Representative: Ponti Sales, Adelaida

(56) References cited:
- EP-A- 0 517 265
- DE-A- 4 230 972

## Description

The present invention relates to a motorcycle case having a mechanism for the securing and closure which ensures closure of the case, both when it is secured and when it is not secured to the motorcycle, and the same time prevents removal of the case if the closure mechanism is in working position.

### BACKGROUND OF THE INVENTION

The attachment of cases to motorcycles is increasingly frequent, which makes it essential to ensure the inviolability of cases, both in respect of undue opening of the lid and in respect of the case to motorcycle chassis securing device.

Known from EP-EP-0 517 265 is a device for closing and coupling carryall cases comprising a mutually hinged shell and counter-shell. The sell comprises a shaped plate linked to lever systems for coupling to said counter-shell and a locking plate to close the device which carries a handle hinged to said shaped plate.

DE 42 30 972 discloses a motorcycle case with a base and a lid hinged to said base. There is a handle rotatably mounted by means of two stems in the base. Cooperating with a stop which is operable with a key are two U-shaped guides which allow the handle from being rotated 90º. The lid is attached to the base by two closing pins formed in said base, these closing pins being engaged with respective locking bolts.

### DESCRIPTION OF THE INVENTION

The motorcycle case of the invention has been designed to provide an effective solution to the needs that have arisen.

Accordingly, the motorcycle case having a mechanism for the securing and closure includes a mechanism provided with a lock intended to block or release at will an engagement member of the lid when the latter is in closed position on the tub part of the case, said tub being provided with a fold-down handle and with means to prevent detachment of the case from a support base that is integral with the chassis of the motorcycle. According to the invention, said engagement member of the lid is linked to the tub part by being hinged to a rod that in its turn is hinged to the handle and to the tub, stops being provided to rest against the handle to prevent swinging of the engagement member when the handle is lowered down against the tub and the engagement member is in a lid closing position; the lock is carried by a blocking lever that is hinged to the tub part and that cooperates with an anchoring member which tends to engage a tooth integral with the support base upon which the case removably rests; and said lock is hinged to the tub by means of a first pin and to the fold-down handle by means of a second pin, said second pin (12) carrying said engagement member. There exist stops formed in the tub part intended to prevent swinging of the engagement member and the handle when they remain lowered down. The lock has three latches, one of which is intended to be inserted within a recess provided in the fold-down handle and which serves to lock said handle, the rest being engageable with said stops for immobilisation of the engagement member and the blocking lever.

It is thus impossible to detach the case from the support base unless the lock is first opened so that the handle can be raised, thus releasing on the one hand the blocking lever and on the other the engagement member.

Advantageously, each end of said pin project outwards defining two protruding stops apt to be inserted in two side notches formed in the handle when the latter is in a lowered condition.

### BRIEF DESCRIPTION OF THE DRAWINGS

For a better understanding of all that is set out in the present specification some drawings are attached in which, solely by way of example, a practical example of embodiment of the motorcycle case is shown.

In said drawings,
Figure 1 is a longitudinal section view of the mechanism of the motorcycle case in closed position;
Figure 2 is a view similar to the previous one, with the mechanism in opening position of the lid and the case anchored on the chassis of the motorcycle;
Figure 3 is a view similar to the previous ones with the lid closed and the handle raised; and
Figure 4 is a view similar to the previous ones, showing the mechanism in the position of closure of the lid and release of the case from the motorcycle chassis,

### DESCRIPTION OF A PREFERRED EMBODIMENT

Said drawings show a case having the general reference -1-, which comprises a tub part -2- and a hinged lid -3-. The case rests on a support base -4- attached to the chassis of the motorcycle, provided with a front tooth -5- and another rear tooth -6-. The front tooth is intended to anchor a closure mechanism which will be described below, while the rear tooth secures a rear projection -7-of the case.

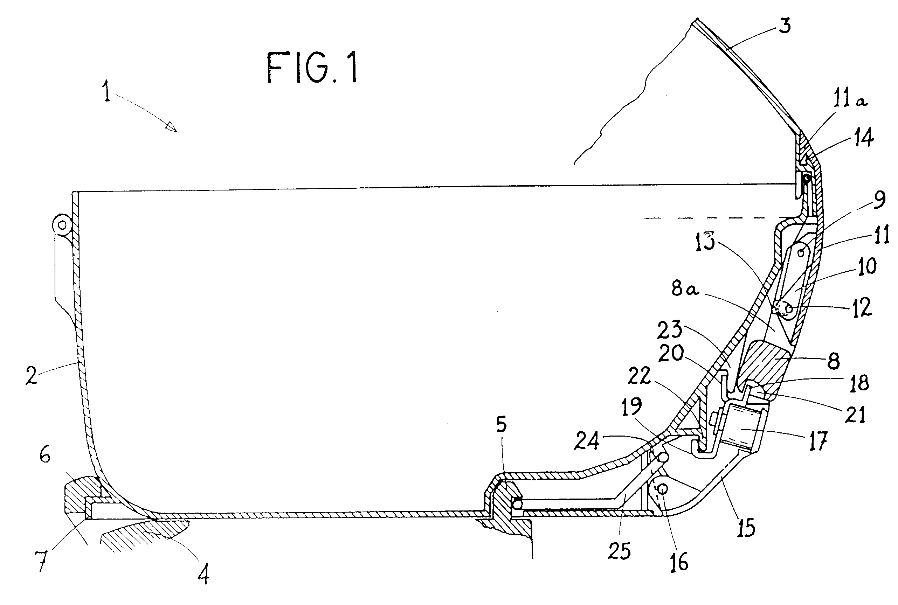

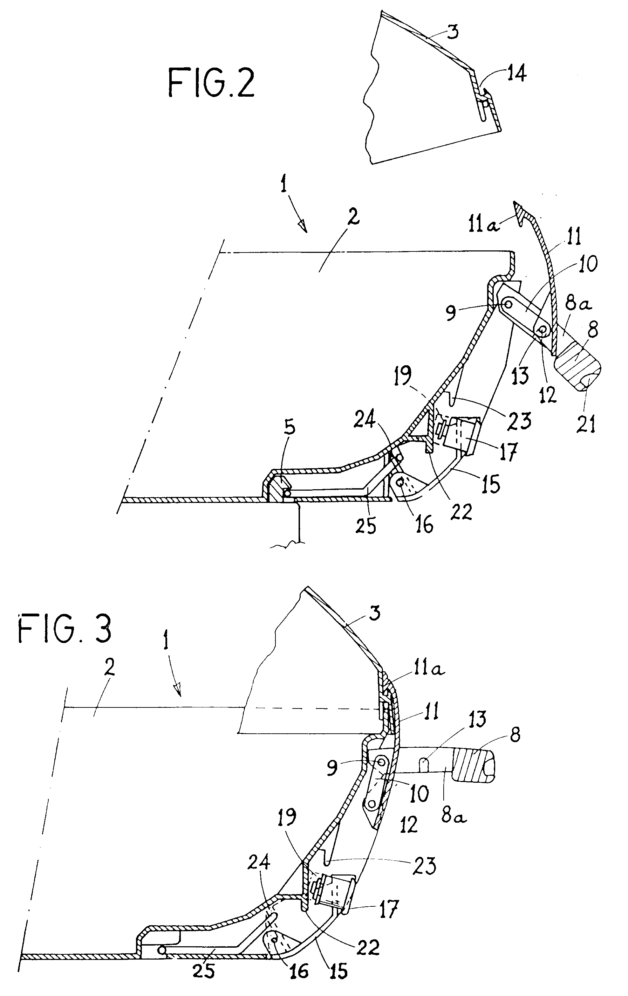

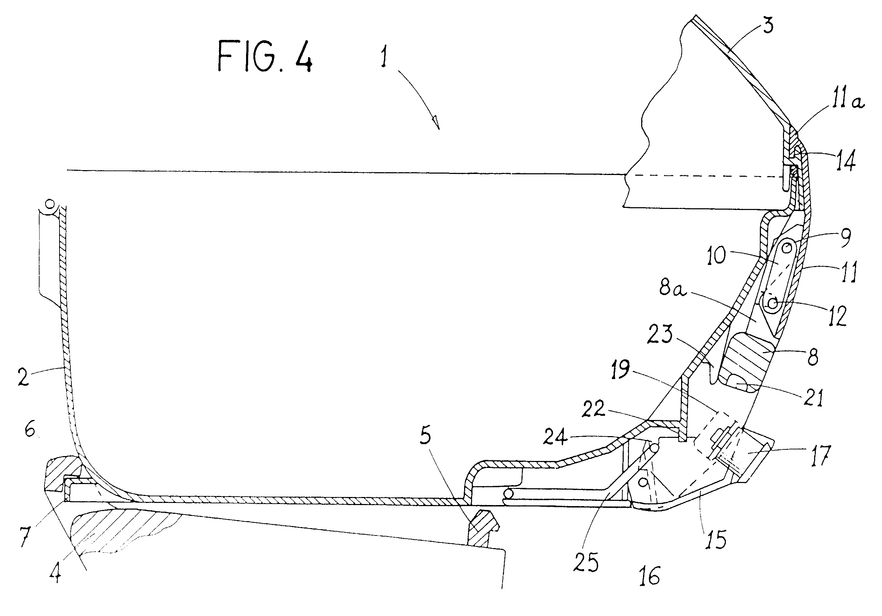

The tub part is provided with a fold-down handle -8- hinged around a pin -9-; around said pin is likewise hinged a rod member -10- arranged between the handle, as mentioned, and an engagement member -11- that is in turn hinged around a pin -12- whose ends project from the sides of said member, forming protruding bosses or stops. The side arms -8a- of the handle have notches -13- into which the ends of the pin -12- can be inserted (Figures 1, 2 and 4). The engagement member -11- forms a tooth -11a- on its upper edge intended to secure the lid -3- by virtue of a front groove -14- provided for this purpose (Figures 1, 3 and 4).

Under the handle -8- is arranged a blocking lever -15- hinged around a pin -16- and carrying a lock -17-provided with latches -18-, -19- and -20-. Latch -18- is intended to be inserted into a recess -21- provided in the handle -8- when the latter is lowered, to prevent it from being raised, while latches -19- and -20- are retained by stops -22- and -23- of the case, to prevent the blocking lever -15- from swinging forward.

The blocking lever in question is elastically biased by a spring (not shown) which tends to place it in a closure position applied against the tub part. This lever presents a notch -24- into which slots a bar -25- which travels axially and which, when the lever is situated against the tub part, engages the tooth -5- and prevents the case from being detached from its support base -4-(Figures 1, 2 and 3).

As can be deduced from all that has been outlined and from observation of the drawings, it can be understood that in the closure position (Figure 1), the handle -8- and the lever -15- are blocked. The handle in its turn blocks the engagement member -11-, so that the lid cannot be opened, while the lever -15- blocks the bar -25-, so that the case cannot be detached from the base -4-.

Upon opening of the lock -17-, the latches -18-, -19- and -20- release the aforesaid handle and lever, allowing the lid to be opened by moving the engagement member -11- upwards, and allowing the case to be detached by pulling the lever -15- outwards.

Independent of the object of the invention shall be the materials used in the manufacturing of the components of the case closure and retention mechanism, their shapes and dimensions and all accessory details which might arise, as long as they do not affect its essential nature.

## Claims

1. Motorcycle case having a mechanism for the securing and closure which mechanism includes a lock (17) intended to block or release at will an engagement member (11) of the lid (3) when the latter is in closed position on the tub part (2) of the case, said tub (2) being provided with a fold-down handle (8) and with means to prevent detachment of the case from a support base (4) that is integral with the chassis of the motorcycle wherein said engagement member (11) of the lid (3) is linked to the tub part (2) by being hinged to a rod (10), said lock (17) being carried by a blocking lever (15) that is hinged to the tub part (2) and that co-operates with an anchoring member (25) which tends to engage a tooth (5) integral with the support base (4) upon which the case removably rests; *characterized in that said rod (10) is hinged to the tub (2) by means of a first pin (9), and to the fold-down handle (8) by means of a second pin(12), said second pin (12) carrying said engagement member; in that there exist stops (22,23) formed in the tub part (2) intended to prevent swinging of the engagement member (11) and the handle (8) when they remain lowered down; said lock (17) having three latches (18,19,20) one of which is intended to be inserted within a recess (21) provided in the fold-down handle (8) and which serves to lock said handle (8), the rest being engageable with said stops (22,23) for immobilisation of the engagement member (11) and the blocking lever (15)*.

2. Motorcycle case as claimed in claim 1, characterized in that each end of said pin (12) project outwards defining two protruding stops apt to be inserted in two side notches (13) formed in the handle (8) when the latter is in a lowered condition.

## Patentansprüche

1. Motorradfachbefestigungs- und -verschlußmechanismus, wobei zu dem Mechanismus ein Schloß (17) gehört, das ein Eingriffsteil (11) des Deckels (3) arretiert oder auf Wunsch freigibt, wenn der Deckel sich in geschlossener Stellung auf dem Fahrzeugteil (2) des Fachs befindet, wobei der Fahrzeugteil (2) mit einem nach unten klappbarem Handgriff (8) und mit einer Einrichtung zur Vermeidung einer Demontage des Fachs von einem Haltegrundteil (4) versehen ist, welches einstückig mit dem Chassis des Motorrads gebildet ist, wobei das Eingriffsteil (11) des Deckels (3) an dem Fahrzeugteil (2) durch Verschwenkbarkeit an einem Stab (10) angelenkt ist, wobei das Schloß (17) von einem Arretierhebel (15) gehalten ist, der an dem Fahrzeugteil (2) angelenkt ist und der mit einem Verankerungsteil (25) zusammen wirkt, das bestrebt ist, an einen Zahn (5) anzugreifen, der einstückig mit der Haltegrundplatte (4) gebildet ist, auf der das Fach entfernbar ruht,
dadurch gekennzeichnet,
daß der Stab (10) an dem Fahrzeugteil (2) mittels eines ersten Zapfens (9) und die herabklappbare Handhabe (8) mittels eines zweiten Zapfens (12) angelenkt ist, wobei der zweite Zapfen (12) das Eingriffselement hält; daß in dem Fahrzeugteil (2) gebildete Anschläge (22, 23) zur Vermeidung eines Verschwenkens des Eingriffsteils (11) und der Handhabe (8) vorgesehen sind, wenn diese nach unten verlagert verbleiben; wobei das Schloß (17) drei Riegel (18, 19, 20) aufweist, von denen einer für den Einsatz in eine Ausnehmung (21) vorgesehen ist, die in der herabklappbaren Handhabe (8) vorgesehen ist und die zur Verriegelung der Handhabe (8) dient, wobei die anderen mit den Anschlägen (22, 23) zur Vermeidung einer Bewegung des Eingriffs (11) und des Blockierhebels (5) eingreifen.

2. Motorradfach nach Anspruch 1, dadurch gekennzeichnet, daß jedes Ende des Zapfens (12) nach außen vorsteht, wobei sie zwei vorstehende Anschläge für den Einsatz in zwei in der Handhabe (8) geformte Seitenrasten (13) gebildet sind, wenn sich die Handhabe in einem abgesenkten Zustand befindet.

## Revendications

1. Malle de motocycle comprenant un mécanisme de fixation et de fermeture, lequel mécanisme inclut un verrou (17) destiné à bloquer ou à libérer à volonté un élément d'engrènement (11) du couvercle (3) lorsque ce dernier est en position fermée sur la partie creuse (2) de la malle, ladite partie creuse (2) étant munie d'une poignée rabattue (8) et de moyens pour empêcher la séparation de la malle d'une base support (4) qui est faite d'un seul bloc avec le châssis du motocycle, dans laquelle ledit élément d'engrènement (11) du couvercle (3) est relié à la partie creuse (2) en étant articulé à une barre (10), ledit verrou (17) étant porté par un levier de blocage (15) qui est articulé à la partie creuse (2) et qui coopère avec un élément d'ancrage (25) qui tend à être en prise avec une dent (5) faite d'un bloc avec la base support (4) sur laquelle la malle est en appui mobile ; *caractérisée en ce que ladite barre (10) est articulée à la partie creuse (2) au moyen d'une première goupille (9), et à la poignée rabattue (8) au moyen d'une seconde goupille (12), ladite seconde goupille (12) portant ledit élément d'engrènement, en ce qu'il existe des butées (22, 23) formées dans la partie creuse (2) destinées à empêcher le basculement de l'élément d'engrènement (11) et de la poignée (8) lorsqu'ils restent baissés ; ledit verrou (17) ayant trois clenches (18, 19, 20) dont l'un est destiné à être inséré à l'intérieur d'un évidement (21) prévu dans la poignée pliée vers le bas (8) et qui sert à verrouiller ladite poignée (8), les autres étant capables d'être engagés avec lesdites butées (22, 23) pour l'immobilisation de l'élément d'engrènement (11) et du levier de blocage (15)*.

2. Malle de motocycle selon la revendication 1, caractérisée en ce que chaque extrémité de ladite goupille (12) déborde vers l'extérieur définissant deux clenches en saillie susceptibles d'être insérées dans deux encoches latérales (13) formées dans la poignée (8) lorsque cette dernière est en position baissée.
